# EUROPÄISCHE PATENTSCHRIFT

(11) **EP 2 327 904 B1**
(45) Veröffentlichungstag und Bekanntmachung des Hinweises auf die Patenterteilung: **05.06.2019**
(21) Anmeldenummer: 10013582.1
(22) Anmeldetag: 13.10.2010
(51) Int. Cl.: F16F 13/22, F16F 13/10

(54) **Zweikammer-Stützlager**
Dual-chamber support bearing
Support à deux chambres

(30) Priorität: 25.11.2009 DE 102009055636
(43) Veröffentlichungstag der Anmeldung: 01.06.2011
(73) Patentinhaber: Vibracoustic GmbH, 64293 Darmstadt (DE)
(72) Erfinder: Beckmann, Wolfgang, 64289 Darmstadt (DE)
(74) Vertreter: Flügel Preissner Schober Seidel

(56) Entgegenhaltungen:
- EP-A2- 0 044 545
- GB-A- 2 391 055

## Beschreibung

Die Erfindung befasst sich mit einem Zweikammer-Stützlager für Fahrzeuge mit einem Traglager für den Anschluss an einen Motorträger und einem Auflager für den Anschluss an die Karosserie, die durch eine Tragfeder aus elastomerem Werkstoff miteinander verbunden sind, und einer hydraulischen Dämpfung aus einer Arbeitskammer und einer davon durch eine Trennwand getrennten, hydraulisch jedoch miteinander kommunizierenden Ausgleichskammer, wobei das Stützlager eine weitere elastomere Feder zur Hochfrequenzentkopplung hat und wobei die weitere Feder in ein Entkopplungsteil integriert ist, das separat zum Stützlager hergestellt zwischen dem Stützlager und der Karosserie einsetzbar ausgebildet ist, wobei das Entkopplungsteil aus einer Bodenplatte und einem Distanzstück besteht, die über eine elastomere Feder miteinander verbunden sind, wobei die Bodenplatte im Schnitt gesehen U-förmig ist, und wobei in den Innenraum zwischen den Schenkeln des U das Distanzstück eingesetzt ist.

### Stand der Technik

Zweikammer-Stützlager sind weit verbreitet und dienen zur Isolierung motorerregter hochfrequenter Schwingungen als auch zur Dämpfung von niedrigfrequenten Schwingungen von großer Amplitude. Letzere treten überwiegend ein beim Überfahren von Fahrbahnunebenheiten. Solche Lager sind beispielsweise in den Patentschriften DE 39 37 232 C2 und DE 41 41 332 C2 dargestellt. Diese Lager sind für viele Anwendungszwecke bestens geeignet. Zum Stand der Technik für diese Lager wird auch auf die DE 198 68 063 C2, DE 198 07 868 A1 sowie DE 199 02 493 C2 hingewiesen. Bei all diesen Ausführungsformen übernimmt die Tragfeder die statische Last. Durch die Bewegungen der Gummifeder wird die Arbeitskammer verkleinert oder vergrößert und dabei die Flüssigkeit von der Arbeitskammer in die Ausgleichskammer beziehungsweise in entgegen gesetzter Richtung gefördert. Dabei hat die Flüssigkeit in der Trennwand zwischen der Arbeitskammer und der Ausgleichskammer befindliche Kanäle zu überwinden. Hierdurch wird eine Dämpfung der niedrigfrequenten Schwingungen von großer Amplitude erreicht. Bei entkoppeltem Hydrolager hat die Trennwand noch ein Gitter, dessen Öffnungen durch eine Membrane abgedeckt sind. Durch die lose, innerhalb der Trennwand angeordnete Membran, wird eine Isolierung für niederfrequente kleinamplitudige Schwingungen durchgeführt. Die Ausbildung der Kanäle beziehungsweise des Kanals und der Durchbrechungen in der Trennwand mit der Membran werden jeweils auf die gegebenen Bedingungen abgestellt und angepasst. Dabei ist man bestrebt, eventuell auftretende Resonanzschwingungen zu vermeiden. Dieses ist jedoch nicht immer möglich. Man ist deshalb bestrebt eine eventuelle Resonanzfrequenz weit außerhalb der Betriebsfrequenzen der schwingenden Maschine zu legen. Insbesondere wird versucht, eine Absenkung der dynamischen Steifigkeit bei besonders kritischen Frequenzen zu erreichen. Hier sind verschiedene Lösungen erarbeitet worden. Unter anderem wurde durch die DE 103 30 056 A1 vorgeschlagen, an der Befestigungsstelle zwischen Lager und Karosserie eine zweite elastische Feder einzufügen, um das Lager von der Karosserie zu isolieren. Hierdurch wurde eine Verschiebung der Resonanzfrequenz in niedrige Frequenzen erreicht und die dynamische Steifigkeit in den für den Motor wichtigen Frequenzbereichen zwischen 1000 und 1700 Hz herabgesetzt.

Aus EP 0 044 545 A2 ist eine Zweikammer-Motorlager bekannt, das ein Traglager und ein Auflager aufweist, die durch eine Tragfeder aus einem elastomeren Werkstoff miteinander verbunden sind. Das Zweikammer-Motorlager weist ferner zwei Kammern auf, die durch eine Zwischenplatte voneinander getrennt und durch eine in die Zwischenplatte eingebrachte Drossel flüssigkeitsleitend miteinander verbunden sind. Zur Dämpfung eines großen Teils der hochfrequenten Schwingungen, weist das Zweikammer-Motorlager ein weiteres Gummilager auf, das über einen Ringflansch mit dem Traglager verbunden ist. Zusätzlich ist das Gummilager mit einer Lagerhaltung verbunden, über das eine Anbindung an ein Kraftfahrzeug erfolgt. In der Druckschriften GB2391055A sind weitere Ausführungsformen von solchen Vorrichtungen gezeigt.

### Darstellung der Erfindung

Der Erfindung liegt die Aufgabe zugrunde eine Konstruktion zu schaffen die es ermöglicht, die Resonanzfrequenz der dynamischen Steifigkeit in Frequenzbereiche zu legen, die außerhalb des üblichen Drehzahlbereichs des Motors liegen. Die Resonanzfrequenz soll möglichst weit von den Betriebsfrequenzen des Motors liegen. Dieses soll insbesondere bei hohen Frequenzen des Motors der Fall sein. Außerdem soll die dynamische Steifigkeit bei den Motorfrequenzen möglichst gering sein. Das Stützlager soll mit möglichst geringen Kosten herstellbar sein, in seiner Ausführungsform an die verschiedenen Gegebenheiten angepasst werden können und leicht montierbar sein. Darüber hinaus soll es möglich sein, bereits bestehende Stützlager so auszurüsten, dass die dynamische Steifigkeit verbessert wird.

Die Lösung der gestellten Aufgabe wird mit den Merkmalen des Anspruchs 1 erreicht. Gemäß der Erfindung wird separat zum Stützlager ein Entkopplungsteil hergestellt, das zwischen dem Stützlager und der Karosserie einsetzbar ausgebildet ist und das eine weitere Feder zur Hochfrequenzentkopplung enthält. Dabei ist die Feder derart zwischen dem Distanzstück und der Bodenplatte eingefügt, dass alle Teile der Bodenplatte und des Distanzstücks durch die Feder voneinander getrennt sind, wobei sowohl der Boden als auch die Schenkel der U-förmigen Bodenplatte einen Federüberzug haben, wobei die Ränder der U-Schenkel umgebördelt sind, und wobei das Distanzstück im Schnitt gesehen T-förmig ausgebildet und derart in den Innenraum der Bodenplatte eingefügt ist, dass seine T-Flanken von den umgebördelten Rändern der U-Schenkel erfasst werden, so dass die umgebördelten Ränder als Anschläge für die Wegbegrenzung der Feder dienen.

Dieses Entkopplungsteil besteht im Wesentlichen aus einer Bodenplatte und einem Distanzstück, welche über eine elastomere Feder miteinander verbunden sind. Die Bodenplatte wird mit der Karosserie verschraubt und das Distanzstück am Stützlager angebracht. Dabei ist es gleichgültig, ob es sich hierbei um ein lineares Hydrolager oder ein entkoppeltes Hydrolager oder auch ein schaltbares Lager handelt. Die elastomere Feder wird in ihrer dynamischen Steifigkeit entsprechend ausgewählt. Sie wird durch Vulkanisation sowohl mit der Bodenplatte als auch mit dem Distanzstück verbunden. Dabei besteht die Bodenplatte aus einem Stahlblech, während das Distanzstück vorzugsweise aus einem Aluminium- Druckguss hergestellt wird. Beide weisen Bohrungen auf, über die sie mit der Karosserie bzw. mit dem Stützlager verschraubt werden.

Das Entkopplungsteil wird in seiner Kontur so ausgebildet, dass es an die Kontur des Lagers als auch der Karosserie angepasst ist. Hier sind die örtlichen Gegebenheiten mitbestimmend. In vielen Fällen wird das Entkopplungsteil ringförmig ausgebildet sein. Im Hinblick auf die Platzverhältnisse kann das Kopplungsteil auch in der Draufsicht eine ovale oder andere Form haben. Bei beschränktem Platz ist es auch günstig, wenn das Entkopplungsteil hufeisenförmig ausgebildet ist.

Der Elastomerkörper wird gemäß den geforderten statischen und dynamischen Eigenschaften ausgewählt und dimensioniert. Auf diese Weise werden die entsprechenden Kennlinien-Progressionen eingestellt. Gegebenenfalls können an der Bodenplatte und/oder am Distanzstück Begrenzungsanschläge für den Federweg vorgesehen werden. Die Bodenplatte ist im Schnitt gesehen U-förmig ausgebildet und das Distanzstück ist in den Innenraum zwischen den Schenkeln des U eingesetzt. Dabei ist dann die Verbindung zwischen der Bodenplatte und dem Distanzstück über den elastomeren Federkörper so durchgeführt, dass alle sich gegenüberliegenden Teile der Bodenplatte und des Distanzstücks durch die elastomere Feder voneinander getrennt sind. Das Distanzstück wird dabei im

Schnitt gesehen T-förmig ausgebildet und derart in den Innenraum der Bodenplatte eingefügt, dass seine T-Flanken von den umgebördelten Rändern der U-Schenkel erfasst werden. Auf diese Weise bilden die umgebördelten Ränder der U-Schenkel einen Anschlag für die Bewegung des Distanzstücks und der Bodenplatte. Der innenliegende Rand des inneren U-Schenkels der Bodenplatte wird zum Distanzstück umgebördelt und der außenliegende Rand das äußeren U-Schenkels radial nach innen zum Distanzstück hin umgebördelt. Um das Umbördeln zu erleichtern, sind die Ränder auf ihrem Umfang mit Ausnehmungen unterbrochen.

Die Bodenplatte ist vorzugsweise ringförmig ausgebildet. Das Entkopplungsteil seinerseits wird jedoch so gestaltet, dass es den Freiraum zwischen dem Stützlager und der Karosserie mit seiner Gestalt ausfüllt. Hierbei kann jegliche Form verwirklicht werden.

In der Bodenplatte sind Durchführungen vorgesehen für die Befestigungsschrauben für den Anschluss an die Karosserie. Das Distanzstück seinerseits hat Gewindebohrungen für die Befestigungsschrauben für den Anschluss an das Stützlager. Bevorzugt wird das Entkopplungteil derart am Lager angebracht, dass das gesamte Lager als Schwingmasse für die weitere elastomere Feder herangezogen werden kann. Für die Befestigung des Entkopplungsteils am Stützlager kann beispielsweise ein am Stützlager vorhandener Flansch dienen.

### Kurzbeschreibung der Zeichnung

Anhand eines in der Zeichnung dargestellten Ausführungsbeispiels wird die Erfindung nachstehend näher erläutert.

Es zeigt:
- Fig. 1: Ein Zweikammer-Stützlager ausgebildet als schaltbares Hydrolager mit einem Entkopplungsteil im Schnitt,
- Fig. 2: das Entkopplungsteil in der Schrägansicht,
- Fig. 3: das Entkopplungsteil in der Draufsicht,
- Fig. 4: das Entkopplungsteil im Schnitt gemäß Linie A-A der Fig. 3,
- Fig. 5: das Entkopplungsteil im Schnitt gemäß der Linie C-C der Fig. 3,
- Fig. 6: das Entkopplungsteil im Schnitt gemäß der Linie B-B der Fig. 4,
- und Fig. 7: im Diagramm den Verlauf der dynamischen Steifigkeit über der Motorfrequenz

### Ausführung der Erfindung

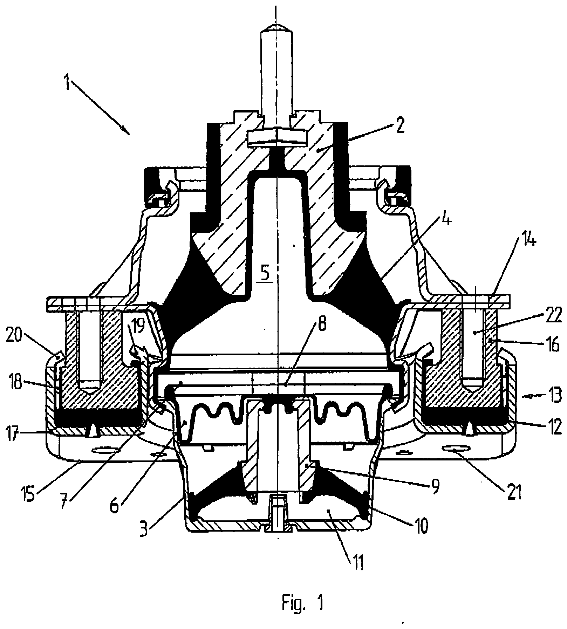

Das in der Fig. 1 im Schnitt gezeigte Zweikammer-Stützlager ist als ein schaltbares Hydrolager ausgebildet. Das Stützlager hat das Traglager 2 und das Auflager 3. Traglager 2 und Auflager 3 sind durch die Tragfeder 4 aus einem Elastomer miteinander verbunden. Die hydraulische Dämpfung wird durch eine in die Arbeitskammer 5 und die Ausgleichskammer 6 eingefüllte Flüssigkeit erreicht, wobei die Arbeitskammer 5 von der Ausgleichskammer 6 durch die Trennwand 7 getrennt ist. Die Trennwand 7 ist in an sich bekannter Weise mit einem Dämpfungskanal zur Dämpfung von Schwingungen mit niedriger Frequenz und großer Amplitude vorgesehen. Außerdem hat die Trennwand Durchbrechungen und eine Membran, über welche eine Isolierung von höherfrequenten kleinamplitudigen Schwingungen erfolgt. Schließlich ist in der Mitte der Trennwand 7 noch die Durchbrechung 8 vorhanden, welche zur Tilgung von Schwingungen im Leerlauf geöffnet wird. Der Verschluss der Öffnung 8 besteht aus dem Verschlussstopfen 9 mit Feder 10. Je nach dem herrschenden Luftdruck bzw. Luftunterdruck im Raum 11 wird die Durchbrechung 8 geöffnet oder verschlossen. Im vorliegenden Beispiel ist das Stützlager 1 mit der weiteren Feder 17 versehen, die in dem Entkopplungsteil 13 untergebracht ist. Dieses Entkopplungsteil 13 ist separat zum Stützlager 1 hergestellt und wird zwischen dem Stützlager 1 und der nicht näher gezeigten Karosserie eingesetzt. Bei einem Stützlager 1, welches mit einem seitlichen Flansch 14versehen ist, kann das Entkopplungsteil 13 sehr einfach an diesem Flansch 14 befestigt werden. Das Entkopplungsteil 13 wird aus der Bodenplatte 15, dem Distanzstück 16 und der Feder 17 gebildet. Die Bodenplatte 15 besteht aus einem Stahlblech, während das Distanzstück aus Aluminiumdruckguss hergestellt ist. Zwischen Distanzstück 16 und Bodenplatte 15 ist die Feder 17 eingefügt und zwar derart, dass alle Teile der Bodenplatte 15 und des Distanzstücks 16 durch die Feder 17 voneinander getrennt sind. Im vorliegenden Fall heißt das, dass die im Schnitt U-förmig ausgebildete Bodenplatte 15 sowohl auf dem Boden des U als auch den Schenkeln 18 des U einen Federüberzug haben, Dabei ist die Feder in der Hauptstoßrichtung des Lagers, wie auf der Zeichnung dargestellt, stärker ausgeführt als in der radialen Richtung. Das Distanzstück 16 ist im Schnitt gesehen T-förmig ausgebildet und in den Innenraum der U-förmigen Bodenplatte 15 eingefügt. Die umgebördelten Ränder 19 und 20 dienen als Anschläge für die Wegbegrenzung der Feder 17. Dabei ist der innenliegende Rand 19 des inneren U-Schenkels 18 radial nach außen zum Distanzstück 16 hin umgebördelt, während der außenliegende Rand 20 des äußeren U-Schenkels 18 radial nach innen zum Distanzstück 16 hin umgebördelt ist.

Die in der Bodenplatte 15 vorhandenen Durchführungen 21 sind für die Befestigung für den Anschluss an die Karosserie vorgesehen. Das Distanzstück 16 seinerseits hat die Gewindebohrungen22 für die Befestigungsschrauben für den Anschluss an das Stützlager 1.

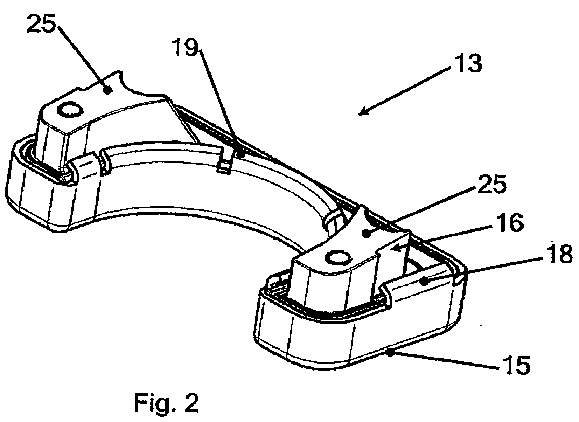

Das in der Fig. 1 gezeigte Entkopplungsteil 13 hat im Hinblick auf den geringen zur Verfügung stehenden Platz zwischen Stützlager 1 und Karosserie eine hufeisenförmige Ausbildung. Diese Form ist in der Fig. 2 in der Schrägansicht von oben dargestellt. Sichtbar sind hier die umgebördelten Ränder 19 und 20 der U-förmigen Schenkel 18 der Bodenplatte 15. Außerdem ist die besondere Gestalt des Distanzstücks 16 erkennbar, welches zwei schräg verlaufende Höcker 25 hat.

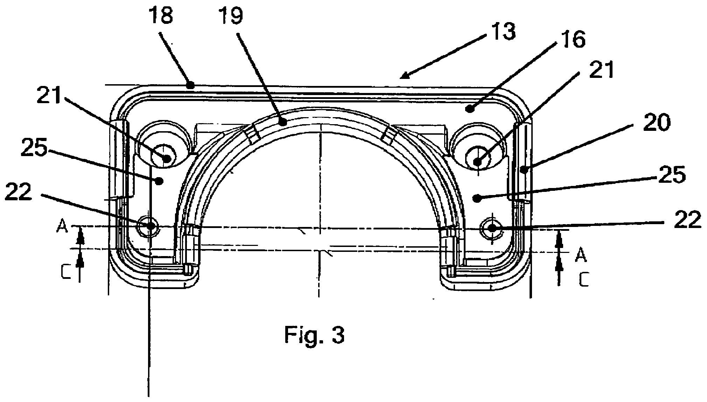

Die Fig. 3 zeigt eine Draufsicht auf das Distanzstück 13. Neben den Gewindebohrungen im Distanzstück 16 sind hier auch die Durchführungen 21 in der Bodenplatte 15 für die Befestigungsschrauben für den Anschluss an die Karosserie sichtbar.

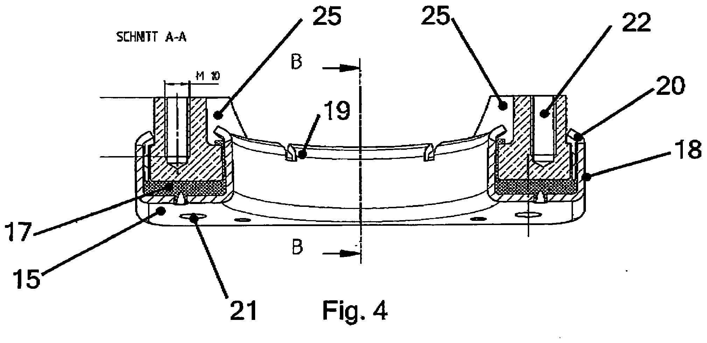

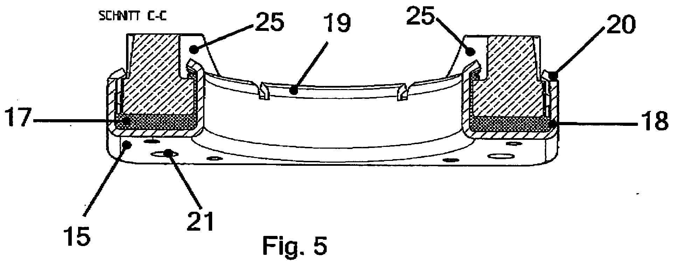

In der Fig. 4 ist ein Schnitt gemäß der Linie A-A der Fig. 3 durch das Entkopplungsteil 13 gezeigt. Während die Fig. 5 den Schnitt gemäß der Linie C-C nach Fig. 3 wiedergibt. Alle Teile in den Fig. 4 und 5 sind mit den gleichen Bezugsziffern wie in der Fig. 3 versehen.

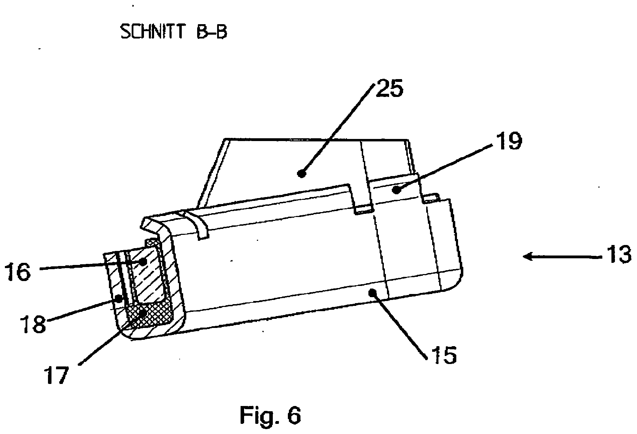

Die Fig. 6 zeigt den Schnitt gemäß der Linie B-B durch das Entkopplungsteil 13 nach der Fig. 4. Hier wird sichtbar, dass sowohl die Feder 17 als auch das Distanzstück 16 die gesamte Bodenfläche 15 des Entkopplungsteils 13 bedecken. Die Höcker 25 sind nur an einem Teil des Distanzstücks 16 angebracht und dienen dazu, einen vorhandenen Freiraum zwischen dem Stützlager 1 und der Karosserie auszufüllen. Für den Fall, dass der Freiraum parallel verlaufende Wände hat, sind die Höcker 25 nicht erforderlich. Es genügt, wenn zwischen der Bodenplatte 15 mit den Schenkeln 18 die Feder 17 und das Distanzstück 16 eingefügt werden und die Anschlagsbegrenzung durch die umgebördelten Ränder 19 und 20 durchgeführt wird.

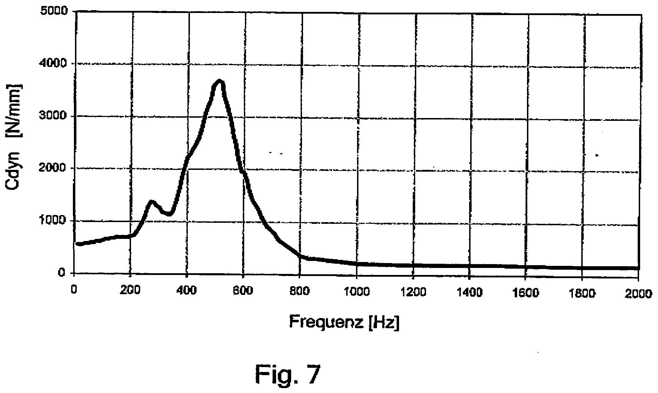

Das in der Fig. 7 gezeigte Diagramm gibt den Verlauf der dynamischen Steifigkeit Cdyn über der Motorfrequenz wieder. Die Resonanzfrequenz und damit die höchste dynamische Steifigkeit liegt hier bei einer Motorfrequenz von etwa 500 Hz. Danach fällt die dynamische Steifigkeit ab, um bei einer Motorfrequenz von etwa 1000 Hz eine sehr niedrige dynamische Steifigkeit zu erreichen, die dann auf diesem Niveau verbleibt. In dem für den Motorbetrieb wichtigen Frequenzbereich von 1000 bis 1800 Hz werden folglich die störenden Resonanzfrequenzen eliminiert.

## Patentansprüche

1. Zweikammer-Stützlager (1) für Fahrzeuge mit einem Traglager (2) und einem Auflager (3), die durch eine Tragfeder (4) aus elastomerem Werkstoff miteinander verbunden sind, und einer hydraulischen Dämpfung aus einer Arbeitskammer (5) und einer davon durch eine Trennwand (7) getrennten, hydraulisch jedoch miteinander kommunizierenden Ausgleichskammer (6), wobei das Stützlager (1) eine weitere elastomere Feder (17) zur Hochfrequenzentkopplung hat und wobei die weitere Feder (17) in ein Entkopplungsteil (13) integriert ist, das separat zum Stützlager (1) hergestellt zwischen dem Stützlager (1) und der Karosserie einsetzbar ausgebildet ist, wobei das Entkopplungsteil (13) aus einer Bodenplatte (15) und einem Distanzstück (16) besteht, die über eine elastomere Feder (17) miteinander verbunden sind, wobei die Bodenplatte (15) im Schnitt gesehen U-förmig ist, und wobei in den Innenraum zwischen den Schenkeln (18) des U das Distanzstück (16) eingesetzt ist, wobei die Feder (17) derart zwischen dem Distanzstück (16) und der Bodenplatte (15) eingefügt ist, dass alle sich gegenüberliegenden Teile der Bodenplatte (15) und des Distanzstücks (16) durch die Feder (17) voneinander getrennt sind,
**dadurch gekennzeichnet, dass** sowohl der Boden als auch die Schenkel (18) der U-förmigen Bodenplatte (15) einen Federüberzug haben, wobei die Ränder (19, 20) der U-Schenkel (18) umgebördelt sind, und wobei das Distanzstück (16) im Schnitt gesehen T-förmig ausgebildet und derart in den Innenraum der Bodenplatte (15) eingefügt ist, dass seine T-Flanken von den umgebördelten Rändern (19, 20) der U-Schenkel erfasst werden, so dass die umgebördelten Ränder (19, 20) als Anschläge für die Wegbegrenzung der Feder (17) dienen.

2. Zweikammer-Stützlager nach Anspruch 1, **dadurch gekennzeichnet, dass** die Bodenplatte (15) aus Stahlblech besteht.

3. Zweikammer-Stützlager nach Anspruch 1 oder 2, **dadurch gekennzeichnet, dass** die Bodenplatte (15) und das Distanzstück (16) mit der Feder (17) durch Vulkanisation miteinander verbunden sind.

4. Zweikammer-Stützlager nach Anspruch 1 bis 3, **dadurch gekennzeichnet, dass** das Entkopplungsteil (13) ringförmig ausgebildet ist.

5. Zweikammer-Stützlager nach Anspruch 1 bis 3, **dadurch gekennzeichnet, dass** das Entkopplungsteil (13) hufeisenförmig ausgebildet ist.

6. Zweikammer-Stützlager nach Anspruch 1 bis 5, **dadurch gekennzeichnet, dass** zwischen den U-Schenkeln (18) und dem Distanzstück (16) Elastomerschichten vorhanden sind.

7. Zweikammer-Stützlager nach Anspruch 1 bis 6, **dadurch gekennzeichnet, dass** der innenliegende Rand (19) des inneren U-Schenkels (18) und der außen liegende Rand (20) des äußeren U-Schenkels (18) jeweils zum Distanzstück hin umgebördelt sind.

8. Zweikammer-Stützlager nach Anspruch 1 bis 7, **dadurch gekennzeichnet, dass** das Entkopplungsteil (13) einen Freiraum zwischen dem Stützlager (1) und der Karosserie ausfüllt.

9. Zweikammer-Stützlager nach Anspruch 1 bis 8, **dadurch gekennzeichnet, dass** in der Bodenplatte (15) Durchführungen (21) für die Befestigungsschrauben für den Anschluss an die Karosserie sind.

10. Zweikammer-Stützlager nach Anspruch 1 bis 9, **dadurch gekennzeichnet, dass** das Distanzstück (16) Gewindebohrungen (22) für die Befestigungsschrauben für den Anschluss an das Stützlager (1) hat.

11. Zweikammer-Stützlager nach Anspruch 1 bis 10, **dadurch gekennzeichnet, dass** das Entkopplungsteil (13) an einem am Stützlager (1) vorhandenen Flansch (14) angebracht ist.

## Claims

1. Two-chamber support mount (1) for vehicles, having a support mount (2) and a support (3) which are connected to one another by a support spring (4) of elastomeric material, and a hydraulic damper comprising a working chamber (5) and a compensation chamber (6) separated from the working chamber (5) by a partition wall (7) but communicating hydraulically with it, the support mount (1) having a further elastomeric spring (17) for high-frequency decoupling, and the further spring (17) being integrated into a decoupling part (13) which is manufactured separately from the support mount (1) and designed to be insertable between the support mount (1) and the vehicle body, the decoupling part (13) consisting of a base plate (15) and a spacer (16) which are connected to one another via an elastomeric spring (17), the base plate (15) being U-shaped when viewed in section, and wherein the spacer (16) is inserted in the interior space between the legs (18) of the U, wherein the spring (17) is inserted between the spacer (16) and the base (plate (15) in such a manner that all parts of the base plate (15) opposing each other and the spacer (16) are separated from each other by the spring (17), **characterised in that** both the base and the legs (18) of the U-shaped base plate (15) have a spring padding , wherein the rims (19, 20) of the U-shaped legs (18) are crimped, and wherein the spacer (16) is T-shaped when viewed in section and is inserted into the interior of the base plate (15) in such a manner that its T-flanks are encompassed by the crimped rim (19, 20) of the U-limbs such that the crimped rims (19, 20) serve as stops for limiting the path of the spring (17).

2. Two-chamber support mount according to claim 1, **characterised in that** the base plate (15) consists of sheet steel.

3. Two-chamber support mount according to claim 1 or 2, **characterised in that** the base plate (15) and the spacer (16) are connected to each other through the spring (17) by vulcanization.

4. Two-chamber support mount according to claim 1 to 3, **characterised in that** the decoupling part (13) is of annular design.

5. Two-chamber support mount according to claim 1 to 3, **characterised in that** the decoupling part (13) is horseshoe-shaped.

6. Two-chamber support mount according to claim 1 to 5, **characterised in that** elastomer layers are provided between the U-legs (18) and the spacer (16).

7. Two-chamber support mount according to claims 1 to 6, **characterised in that** the inner edge (19) of the inner U-leg (18) and the outer rim (20) of the outer U-leg (18) are each crimped towards the spacer.

8. Two-chamber support mount according to claims 1 to 7, **characterised in that** the decoupling part (13) fills a free space between the support mount (1) and the body.

9. Two-chamber support mount according to claims 1 to 8, **characterised in that** bushings (21) are provided in the base plate (15) for the fastening screws for connection to the body.

10. Two-chamber support mount according to claims 1 to 9, **characterised in that** the spacer (16) has threaded bores (22) for the fastening screws for connection to the support mount (1).

11. Two-chamber support mount according to claim 1 to 10, **characterised in that** the decoupling part (13) is attached to a flange (14) provided on the support mount (1).

## Revendications

1. Support à deux chambres (1) pour véhicules, comportant un support porteur (2) et un appui (3) qui sont reliés l'un à l'autre par un ressort porteur (4) en matériau élastomère, et un amortissement hydraulique constitué d'une chambre de travail (5) et d'une chambre de compensation (6) qui est séparée de celle-ci par une cloison de séparation (7) mais qui est en communication avec ladite chambre de travail sur le plan hydraulique,
dans lequel
le support (1) comprend un autre ressort élastomère (17) pour le découplage haute fréquence et l'autre ressort (17) est intégré dans une partie de découplage (13) qui est réalisée séparément du support (1) et qui est réalisée de manière à pouvoir être mise en place entre le support (1) et la carrosserie,
la partie de découplage (13) est constituée d'une plaque de fond (15) et d'un élément écarteur (16) qui sont reliés l'un à l'autre par un ressort élastomère (17),
la plaque de fond (15), vue en coupe, est en forme de U, et
l'élément écarteur (16) est mis en place dans le volume intérieur entre les branches (18) de la forme en U,
le ressort (17) est inséré entre l'élément écarteur (16) et la plaque de fond (15) de telle sorte que toutes les parties mutuellement opposées de la plaque de fond (15) et de l'élément écarteur (16) sont séparées les unes des autres par le ressort (17),
**caractérisé en ce que**
aussi bien le fond que les branches (18) de la plaque de fond (15) en forme de U présentent un revêtement élastique, les bords (19, 20) des branches en U (18) étant rabattus, et l'élément écarteur (16), vue en coupe, est réalisé en forme de T et est inséré dans le volume intérieur de la plaque de fond (15) de telle sorte que ses flancs en T sont saisis par les bords rabattus (19, 20) des branches en U, de telle sorte que les bords rabattus (19, 20) servent de butées pour délimiter la course du ressort (17).

2. Support à deux chambres selon la revendication 1,
**caractérisé en ce que**
la plaque de fond (15) est constituée en tôle d'acier.

3. Support à deux chambres selon la revendication 1 ou 2,
**caractérisé en ce que**
la plaque de fond (15) et l'élément écarteur (16) sont reliés entre eux au moyen du ressort (17) par vulcanisation.

4. Support à deux chambres selon l'une des revendications 1 à 3,
**caractérisé en ce que**
la partie de découplage (13) est réalisée sous forme annulaire.

5. Support à deux chambres selon l'une des revendications 1 à 3,
**caractérisé en ce que**
la partie de découplage (13) est réalisée en forme de fer à cheval.

6. Support à deux chambres selon l'une des revendications 1 à 5,
**caractérisé en ce que**
des couches en élastomère sont prévues entre les branches en U (18) et l'élément écarteur (16).

7. Support à deux chambres selon l'une des revendications 1 à 6,
**caractérisé en ce que**
le bord intérieur (19) de la branche intérieure du U (18) et le bord extérieur (20) de la branche extérieure du U (18) sont chacun rabattu vers l'élément écarteur.

8. Support à deux chambres selon l'une des revendications 1 à 7,
**caractérisé en ce que**
la partie de découplage (13) remplit un espace libre entre le support (1) et la carrosserie.

9. Support à deux chambres selon l'une des revendications 1 à 8,
**caractérisé en ce que**
des traversées (21) sont prévues dans la plaque de fond (15) pour les vis de fixation destinées au raccordement à la carrosserie.

10. Support à deux chambres selon l'une des revendications 1 à 9,
**caractérisé en ce que**
l'élément écarteur (16) comprend des perçages taraudés (22) pour les vis de fixation destinées au raccordement au support (1).

11. Support à deux chambres selon l'une des revendications 1 à 10,
**caractérisé en ce que**
la partie de découplage (13) est montée sur une bride (14) prévue sur le support (1).
